# EUROPEAN PATENT APPLICATION

(11) **EP 4 329 308 A1**
(43) Date of publication of application: **28.02.2024**
(21) Application number: 22792067.5
(22) Date of filing: 22.04.2022
(51) Int. Cl.: H04N 19/70, H04N 19/30, H04N 19/184, H04N 21/2343, H04N 21/236

(54) **IMAGE ENCODING/DECODING METHOD AND DEVICE BASED ON SEI MESSAGE INCLUDING LAYER IDENTIFIER INFORMATION, AND METHOD FOR TRANSMITTING BITSTREAM**

(30) Priority: 23.04.2021 US 202163178531 P
(71) Applicant: LG Electronics Inc., Yeongdeungpo-gu Seoul 07336 (KR)
(72) Inventor: HENDRY, Hendry, Seoul 06772 (KR)
(74) Representative: Mooser, Sebastian Thomas
(86) International application number: PCT/KR2022/005797
(87) International publication number: WO 2022/225369

(57) **Abstract**

An image encoding/decoding method and apparatus are provided. The image decoding method performed by an image decoding apparatus may comprise receiving a supplemental enhancement information (SEI) message including information about one or more layers included in a bitstream, obtaining the information about the one or more layers based on the received SEI message, and reconstructing an image in the bitstream based on the obtained information about the one or more layers. The received SEI message may comprise layer identifier information of the one or more layers included in the bitstream.

## Description

### Technical Field

The present disclosure relates to an image encoding/decoding method and apparatus and more particularly, to an image encoding/decoding method and apparatus based on a supplemental enhancement information (SEI) message including layer identifier information of one or more layers included in a bitstream and a method of transmitting a bitstream generated by the image encoding method/apparatus of the present disclosure.

### Background Art

Recently, demand for high-resolution and high-quality images such as high definition (HD) images and ultra high definition (UHD) images is increasing in various fields. As resolution and quality of image data are improved, the amount of transmitted information or bits relatively increases as compared to existing image data. An increase in the amount of transmitted information or bits causes an increase in transmission cost and storage cost.

Accordingly, there is a need for high-efficient image compression technology for effectively transmitting, storing and reproducing information on high-resolution and high-quality images.

### Disclosure

### Technical Problem

An object of the present disclosure is to provide an image encoding/decoding method and apparatus with improved encoding/decoding efficiency.

An object of the present disclosure is to provide an image encoding/decoding method and apparatus for performing image reconstruction based on layer identifier information of an SEI message.

An object of the present disclosure is to provide a method and apparatus for encoding/decoding an image by obtaining information about one or more layers included in a bitstream based on an SEI message.

An object of the present disclosure is to provide a method of transmitting a bitstream generated by an image encoding method or apparatus according to the present disclosure.

An object of the present disclosure is to provide a recording medium storing a bitstream generated by an image encoding method or apparatus according to the present disclosure.

An object of the present disclosure is to provide a recording medium storing a bitstream received, decoded and used to reconstruct an image by an image decoding apparatus according to the present disclosure.

The technical problems solved by the present disclosure are not limited to the above technical problems and other technical problems which are not described herein will become apparent to those skilled in the art from the following description.

### Technical Solution

According to an embodiment of the present disclosure, an image decoding method performed by an image decoding apparatus may comprise receiving a supplemental enhancement information (SEI) message including information about one or more layers included in a bitstream, obtaining the information about the one or more layers based on the received SEI message and reconstructing an image in the bitstream based on the obtained information about the one or more layers. The received SEI message may comprise layer identifier information of the one or more layers included in the bitstream.

According to an embodiment of the present disclosure, the layer identifier information may be obtained by a maximum number of layers in the bitstream.

According to an embodiment of the present disclosure, information about the maximum number of layers in the bitstream may be obtained from the SEI message.

According to an embodiment of the present disclosure, the SEI message may comprise information about a layer other than the one or more layers included in the bitstream.

According to an embodiment of the present disclosure, the maximum number of layers in the bitstream may not be constrained by the number of one or more layers in the bitstream.

According to an embodiment of the present disclosure, the maximum number of layers in the bitstream may be constrained to not have a value less than the number of one or more layers in the bitstream.

According to an embodiment of the present disclosure, the layer identifier information may be signaled for each of a view id or an auxiliary id.

According to an embodiment of the present disclosure, the layer identifier information may be included in the SEI message in ascending order of layer identifier values such that a layer identifier of an i-th layer has a larger value than a layer identifier of an (i-1)-th layer.

According to an embodiment of the present disclosure, the layer identifier information is included in the SEI message in descending order of layer identifier values such that a layer identifier of an i-th layer has a smaller value than a layer identifier of an (i-1)-th layer.

According to an embodiment of the present disclosure, an image encoding method performed by an image encoding apparatus may comprise encoding an image in a bitstream based on information about one or more layers in the bitstream and encoding a supplemental enhancement information (SEI) message including information about the one or more layers included in the bitstream into the bitstream. The SEI message may comprise layer identifier information of the one or more layers included in the bitstream.

According to an embodiment of the present disclosure, the layer identifier information may be included in the SEI message by a maximum number of layers in the bitstream.

According to an embodiment of the present disclosure, information about a maximum number of layers in the bitstream may be included in the SEI message.

According to an embodiment of the present disclosure, a bitstream generated by the image encoding apparatus or the image encoding method may be transmitted.

According to an embodiment of the present disclosure, a bitstream generated by an image encoding method may be stored or recorded in a computer-readable medium.

The features briefly summarized above with respect to the present disclosure are merely exemplary aspects of the detailed description below of the present disclosure, and do not limit the scope of the present disclosure.

### Advantageous Effects

According to the present disclosure, it is possible to provide an image encoding/decoding method and apparatus with improved encoding/decoding efficiency.

According to the present disclosure, it is possible to provide an image encoding/decoding method and apparatus based on an SEI message including information about one or more layers.

According to the present disclosure, it is possible to provide a method and apparatus for encoding/decoding an image including a layer identifier information of one or more layers.

According to the present disclosure, it is possible to provide a method of transmitting a bitstream generated by an image encoding method or apparatus according to the present disclosure.

According to the present disclosure, it is possible to provide a recording medium storing a bitstream generated by an image encoding method or apparatus according to the present disclosure.

According to the present disclosure, it is possible to provide a recording medium storing a bitstream received, decoded and used to reconstruct an image by an image decoding apparatus according to the present disclosure.

It will be appreciated by persons skilled in the art that that the effects that can be achieved through the present disclosure are not limited to what has been particularly described hereinabove and other advantages of the present disclosure will be more clearly understood from the detailed description.

### Description of Drawings

FIG. 1 is a view schematically showing a video coding system, to which an embodiment of the present disclosure is applicable.
FIG. 2 is a view schematically showing an image encoding apparatus, to which an embodiment of the present disclosure is applicable.
FIG. 3 is a view schematically showing an image decoding apparatus, to which an embodiment of the present disclosure is applicable.
FIG. 4 is a view schematically showing an image decoding procedure.
FIG. 5 is a view schematically showing an image encoding procedure.
FIG. 6 is a view schematically illustrating a coding layer and structure according to the present disclosure.
FIGS. 7 to 14 are views illustrating syntax related to multi-layer information in a VPS according to the present disclosure.
FIG. 15 is a view illustrating SDI SEI message syntax according to an embodiment of the present disclosure.
FIG. 16 is a view illustrating an image decoding method according to an embodiment of the present disclosure.
FIG. 17 is a view illustrating an image encoding method according to an embodiment of the present disclosure.
FIG. 18 is a view illustrating an image encoding/decoding apparatus according to an embodiment of the present disclosure.
FIG. 19 is a view illustrating a content streaming system to which an embodiment of the present disclosure is applicable.

### Best Mode

An image encoding/decoding method and apparatus are provided. The image decoding method performed by an image decoding apparatus may comprise receiving a supplemental enhancement information (SEI) message including information about one or more layers included in a bitstream, obtaining the information about the one or more layers based on the received SEI message, and reconstructing an image in the bitstream based on the obtained information about the one or more layers. The received SEI message may comprise layer identifier information of the one or more layers included in the bitstream.

### Mode for Invention

Hereinafter, the embodiments of the present disclosure will be described in detail with reference to the accompanying drawings so as to be easily implemented by those skilled in the art. However, the present disclosure may be implemented in various different forms, and is not limited to the embodiments described herein.

In describing the present disclosure, if it is determined that the detailed description of a related known function or construction renders the scope of the present disclosure unnecessarily ambiguous, the detailed description thereof will be omitted. In the drawings, parts not related to the description of the present disclosure are omitted, and similar reference numerals are attached to similar parts.

In the present disclosure, when a component is "connected", "coupled" or "linked" to another component, it may include not only a direct connection relationship but also an indirect connection relationship in which an intervening component is present. In addition, when a component "includes" or "has" other components, it means that other components may be further included, rather than excluding other components unless otherwise stated.

In the present disclosure, the terms first, second, etc. may be used only for the purpose of distinguishing one component from other components, and do not limit the order or importance of the components unless otherwise stated. Accordingly, within the scope of the present disclosure, a first component in one embodiment may be referred to as a second component in another embodiment, and similarly, a second component in one embodiment may be referred to as a first component in another embodiment.

In the present disclosure, components that are distinguished from each other are intended to clearly describe each feature, and do not mean that the components are necessarily separated. That is, a plurality of components may be integrated and implemented in one hardware or software unit, or one component may be distributed and implemented in a plurality of hardware or software units. Therefore, even if not stated otherwise, such embodiments in which the components are integrated or the component is distributed are also included in the scope of the present disclosure.

In the present disclosure, the components described in various embodiments do not necessarily mean essential components, and some components may be optional components. Accordingly, an embodiment consisting of a subset of components described in an embodiment is also included in the scope of the present disclosure. In addition, embodiments including other components in addition to components described in the various embodiments are included in the scope of the present disclosure.

The present disclosure relates to encoding and decoding of an image, and terms used in the present disclosure may have a general meaning commonly used in the technical field, to which the present disclosure belongs, unless newly defined in the present disclosure.

In the present disclosure, a "picture" generally refers to a unit representing one image in a specific time period, and a slice/tile is a coding unit constituting a part of a picture, and one picture may be composed of one or more slices/tiles. In addition, a slice/tile may include one or more coding tree units (CTUs).

In the present disclosure, a "pixel" or a "pel" may mean a smallest unit constituting one picture (or image). In addition, "sample" may be used as a term corresponding to a pixel. A sample may generally represent a pixel or a value of a pixel, and may represent only a pixel/pixel value of a luma component or only a pixel/pixel value of a chroma component.

In the present disclosure, a "unit" may represent a basic unit of image processing. The unit may include at least one of a specific region of the picture and information related to the region. The unit may be used interchangeably with terms such as "sample array", "block" or "area" in some cases. In a general case, an M×N block may include samples (or sample arrays) or a set (or array) of transform coefficients of M columns and N rows.

In the present disclosure, "current block" may mean one of "current coding block", "current coding unit", "coding target block", "decoding target block" or "processing target block". When prediction is performed, "current block" may mean "current prediction block" or "prediction target block". When transform (inverse transform)/quantization (dequantization) is performed, "current block" may mean "current transform block" or "transform target block". When filtering is performed, "current block" may mean "filtering target block".

In addition, in the present disclosure, a "current block" may mean a block including both a luma component block and a chroma component block or "a luma block of a current block" unless explicitly stated as a chroma block. The "chroma block of the current block" may be expressed by including an explicit description of a chroma block, such as "chroma block" or "current chroma block".

In the present disclosure, the term "f" and "," should be interpreted to indicate "and/or." For instance, the expression "A/B" and "A, B" may mean "A and/or B." Further, "A/B/C" and "A/B/C" may mean "at least one of A, B, and/or C."

In the present disclosure, the term "or" should be interpreted to indicate "and/or." For instance, the expression "A or B" may comprise 1) only "A", 2) only "B", and/or 3) both "A and B". In other words, in the present disclosure, the term "or" should be interpreted to indicate "additionally or alternatively."

### Overview of video coding system

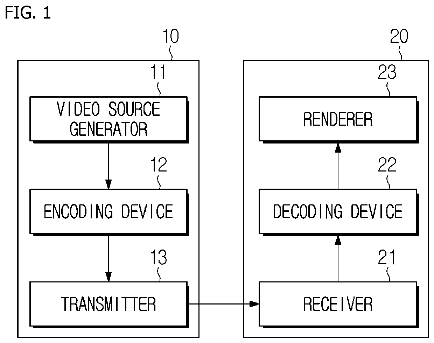

FIG. 1 is a view showing a video coding system according to the present disclosure.

The video coding system according to an embodiment may include an encoding apparatus 10 and a decoding apparatus 20. The encoding apparatus 10 may deliver encoded video and/or image information or data to the decoding apparatus 20 in the form of a file or streaming via a digital storage medium or network.

The encoding apparatus 10 according to an embodiment may include a video source generator 11, an encoding unit 12 and a transmitter 13. The decoding apparatus 20 according to an embodiment may include a receiver 21, a decoding unit 22 and a renderer 23. The encoding unit 12 may be called a video/image encoding unit, and the decoding unit 22 may be called a video/image decoding unit. The transmitter 13 may be included in the encoding unit 12. The receiver 21 may be included in the decoding unit 22. The renderer 23 may include a display and the display may be configured as a separate device or an external component.

The video source generator 11 may acquire a video/image through a process of capturing, synthesizing or generating the video/image. The video source generator 11 may include a video/image capture device and/or a video/image generating device. The video/image capture device may include, for example, one or more cameras, video/image archives including previously captured video/images, and the like. The video/image generating device may include, for example, computers, tablets and smartphones, and may (electronically) generate video/images. For example, a virtual video/image may be generated through a computer or the like. In this case, the video/image capturing process may be replaced by a process of generating related data.

The encoding unit 12 may encode an input video/image. The encoding unit 12 may perform a series of procedures such as prediction, transform, and quantization for compression and coding efficiency. The encoding unit 12 may output encoded data (encoded video/image information) in the form of a bitstream.

The transmitter 13 may transmit the encoded video/image information or data output in the form of a bitstream to the receiver 21 of the decoding apparatus 20 through a digital storage medium or a network in the form of a file or streaming. The digital storage medium may include various storage mediums such as USB, SD, CD, DVD, Blu-ray, HDD, SSD, and the like. The transmitter 13 may include an element for generating a media file through a predetermined file format and may include an element for transmission through a broadcast/communication network. The receiver 21 may extract/receive the bitstream from the storage medium or network and transmit the bitstream to the decoding unit 22.

The decoding unit 22 may decode the video/image by performing a series of procedures such as dequantization, inverse transform, and prediction corresponding to the operation of the encoding unit 12.

The renderer 23 may render the decoded video/image. The rendered video/image may be displayed through the display.

### Overview of image encoding apparatus

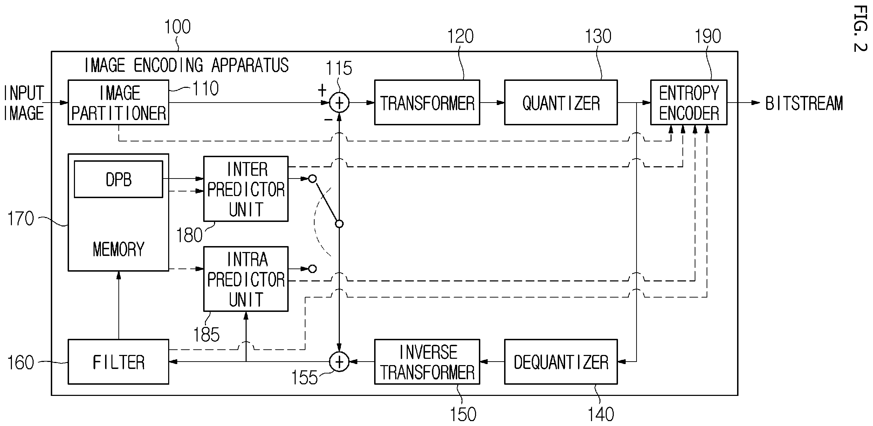

FIG. 2 is a view schematically showing an image encoding apparatus, to which an embodiment of the present disclosure is applicable.

As shown in FIG. 2, the image source device 100 may include an image partitioner 110, a subtractor 115, a transformer 120, a quantizer 130, a dequantizer 140, an inverse transformer 150, an adder 155, a filter 160, a memory 170, an inter prediction unit 180, an intra prediction unit 185 and an entropy encoder 190. The inter prediction unit 180 and the intra prediction unit 185 may be collectively referred to as a "prediction unit". The transformer 120, the quantizer 130, the dequantizer 140 and the inverse transformer 150 may be included in a residual processor. The residual processor may further include the subtractor 115.

All or at least some of the plurality of components configuring the image source device 100 may be configured by one hardware component (e.g., an encoder or a processor) in some embodiments. In addition, the memory 170 may include a decoded picture buffer (DPB) and may be configured by a digital storage medium.

The image partitioner 110 may partition an input image (or a picture or a frame) input to the image source device 100 into one or more processing units. For example, the processing unit may be called a coding unit (CU). The coding unit may be obtained by recursively partitioning a coding tree unit (CTU) or a largest coding unit (LCU) according to a quad-tree binary-tree ternary-tree (QT/BT/TT) structure. For example, one coding unit may be partitioned into a plurality of coding units of a deeper depth based on a quad tree structure, a binary tree structure, and/or a ternary structure. For partitioning of the coding unit, a quad tree structure may be applied first and the binary tree structure and/or ternary structure may be applied later. The coding procedure according to the present disclosure may be performed based on the final coding unit that is no longer partitioned. The largest coding unit may be used as the final coding unit or the coding unit of deeper depth obtained by partitioning the largest coding unit may be used as the final coding unit. Here, the coding procedure may include a procedure of prediction, transform, and reconstruction, which will be described later. As another example, the processing unit of the coding procedure may be a prediction unit (PU) or a transform unit (TU). The prediction unit and the transform unit may be split or partitioned from the final coding unit. The prediction unit may be a unit of sample prediction, and the transform unit may be a unit for deriving a transform coefficient and/or a unit for deriving a residual signal from the transform coefficient.

The prediction unit (the inter prediction unit 180 or the intra prediction unit 185) may perform prediction on a block to be processed (current block) and generate a predicted block including prediction samples for the current block. The prediction unit may determine whether intra prediction or inter prediction is applied on a current block or CU basis. The prediction unit may generate various information related to prediction of the current block and transmit the generated information to the entropy encoder 190. The information on the prediction may be encoded in the entropy encoder 190 and output in the form of a bitstream.

The intra prediction unit 185 may predict the current block by referring to the samples in the current picture. The referred samples may be located in the neighborhood of the current block or may be located apart according to the intra prediction mode and/or the intra prediction technique. The intra prediction modes may include a plurality of non-directional modes and a plurality of directional modes. The non-directional mode may include, for example, a DC mode and a planar mode. The directional mode may include, for example, 33 directional prediction modes or 65 directional prediction modes according to the degree of detail of the prediction direction. However, this is merely an example, more or less directional prediction modes may be used depending on a setting. The intra prediction unit 185 may determine the prediction mode applied to the current block by using a prediction mode applied to a neighboring block.

The inter prediction unit 180 may derive a predicted block for the current block based on a reference block (reference sample array) specified by a motion vector on a reference picture. In this case, in order to reduce the amount of motion information transmitted in the inter prediction mode, the motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. The reference picture including the reference block and the reference picture including the temporal neighboring block may be the same or different. The temporal neighboring block may be called a collocated reference block, a co-located CU (coICU), and the like. The reference picture including the temporal neighboring block may be called a collocated picture (colPic). For example, the inter prediction unit 180 may configure a motion information candidate list based on neighboring blocks and generate information indicating which candidate is used to derive a motion vector and/or a reference picture index of the current block. Inter prediction may be performed based on various prediction modes. For example, in the case of a skip mode and a merge mode, the inter prediction unit 180 may use motion information of the neighboring block as motion information of the current block. In the case of the skip mode, unlike the merge mode, the residual signal may not be transmitted. In the case of the motion vector prediction (MVP) mode, the motion vector of the neighboring block may be used as a motion vector predictor, and the motion vector of the current block may be signaled by encoding a motion vector difference and an indicator for a motion vector predictor. The motion vector difference may mean a difference between the motion vector of the current block and the motion vector predictor.

The prediction unit may generate a prediction signal based on various prediction methods and prediction techniques described below. For example, the prediction unit may not only apply intra prediction or inter prediction but also simultaneously apply both intra prediction and inter prediction, in order to predict the current block. A prediction method of simultaneously applying both intra prediction and inter prediction for prediction of the current block may be called combined inter and intra prediction (CIIP). In addition, the prediction unit may perform intra block copy (IBC) for prediction of the current block. Intra block copy may be used for content image/video coding of a game or the like, for example, screen content coding (SCC). IBC is a method of predicting a current picture using a previously reconstructed reference block in the current picture at a location apart from the current block by a predetermined distance. When IBC is applied, the location of the reference block in the current picture may be encoded as a vector (block vector) corresponding to the predetermined distance. IBC basically performs prediction in the current picture, but may be performed similarly to inter prediction in that a reference block is derived within the current picture. That is, IBC may use at least one of the inter prediction techniques described in the present disclosure.

The prediction signal generated by the prediction unit may be used to generate a reconstructed signal or to generate a residual signal. The subtractor 115 may generate a residual signal (residual block or residual sample array) by subtracting the prediction signal (predicted block or prediction sample array) output from the prediction unit from the input image signal (original block or original sample array). The generated residual signal may be transmitted to the transformer 120.

The transformer 120 may generate transform coefficients by applying a transform technique to the residual signal. For example, the transform technique may include at least one of a discrete cosine transform (DCT), a discrete sine transform (DST), a karhunen-loève transform (KLT), a graph-based transform (GBT), or a conditionally non-linear transform (CNT). Here, the GBT means transform obtained from a graph when relationship information between pixels is represented by the graph. The CNT refers to transform obtained based on a prediction signal generated using all previously reconstructed pixels. In addition, the transform process may be applied to square pixel blocks having the same size or may be applied to blocks having a variable size rather than square.

The quantizer 130 may quantize the transform coefficients and transmit them to the entropy encoder 190. The entropy encoder 190 may encode the quantized signal (information on the quantized transform coefficients) and output a bitstream. The information on the quantized transform coefficients may be referred to as residual information. The quantizer 130 may rearrange quantized transform coefficients in a block type into a one-dimensional vector form based on a coefficient scanning order and generate information on the quantized transform coefficients based on the quantized transform coefficients in the one-dimensional vector form.

The entropy encoder 190 may perform various encoding methods such as, for example, exponential Golomb, context-adaptive variable length coding (CAVLC), context-adaptive binary arithmetic coding (CABAC), and the like. The entropy encoder 190 may encode information necessary for video/image reconstruction other than quantized transform coefficients (e.g., values of syntax elements, etc.) together or separately. Encoded information (e.g., encoded video/image information) may be transmitted or stored in units of network abstraction layers (NALs) in the form of a bitstream. The video/image information may further include information on various parameter sets such as an adaptation parameter set (APS), a picture parameter set (PPS), a sequence parameter set (SPS), or a video parameter set (VPS). In addition, the video/image information may further include general constraint information. The signaled information, transmitted information and/or syntax elements described in the present disclosure may be encoded through the above-described encoding procedure and included in the bitstream.

The bitstream may be transmitted over a network or may be stored in a digital storage medium. The network may include a broadcasting network and/or a communication network, and the digital storage medium may include various storage media such as USB, SD, CD, DVD, Blu-ray, HDD, SSD, and the like. A transmitter (not shown) transmitting a signal output from the entropy encoder 190 and/or a storage unit (not shown) storing the signal may be included as internal/external element of the image source device 100. Alternatively, the transmitter may be provided as the component of the entropy encoder 190.

The quantized transform coefficients output from the quantizer 130 may be used to generate a residual signal. For example, the residual signal (residual block or residual samples) may be reconstructed by applying dequantization and inverse transform to the quantized transform coefficients through the dequantizer 140 and the inverse transformer 150.

The adder 155 adds the reconstructed residual signal to the prediction signal output from the inter prediction unit 180 or the intra prediction unit 185 to generate a reconstructed signal (reconstructed picture, reconstructed block, reconstructed sample array). If there is no residual for the block to be processed, such as a case where the skip mode is applied, the predicted block may be used as the reconstructed block. The adder 155 may be called a reconstructor or a reconstructed block generator. The generated reconstructed signal may be used for intra prediction of a next block to be processed in the current picture and may be used for inter prediction of a next picture through filtering as described below.

The filter 160 may improve subjective/objective image quality by applying filtering to the reconstructed signal. For example, the filter 160 may generate a modified reconstructed picture by applying various filtering methods to the reconstructed picture and store the modified reconstructed picture in the memory 170, specifically, a DPB of the memory 170. The various filtering methods may include, for example, deblocking filtering, a sample adaptive offset, an adaptive loop filter, a bilateral filter, and the like. The filter 160 may generate various information related to filtering and transmit the generated information to the entropy encoder 190 as described later in the description of each filtering method. The information related to filtering may be encoded by the entropy encoder 190 and output in the form of a bitstream.

The modified reconstructed picture transmitted to the memory 170 may be used as the reference picture in the inter prediction unit 180. When inter prediction is applied through the image source device 100, prediction mismatch between the image source device 100 and the image decoding apparatus may be avoided and encoding efficiency may be improved.

The DPB of the memory 170 may store the modified reconstructed picture for use as a reference picture in the inter prediction unit 180. The memory 170 may store the motion information of the block from which the motion information in the current picture is derived (or encoded) and/or the motion information of the blocks in the picture that have already been reconstructed. The stored motion information may be transmitted to the inter prediction unit 180 and used as the motion information of the spatial neighboring block or the motion information of the temporal neighboring block. The memory 170 may store reconstructed samples of reconstructed blocks in the current picture and may transfer the reconstructed samples to the intra prediction unit 185.

### Overview of image decoding apparatus

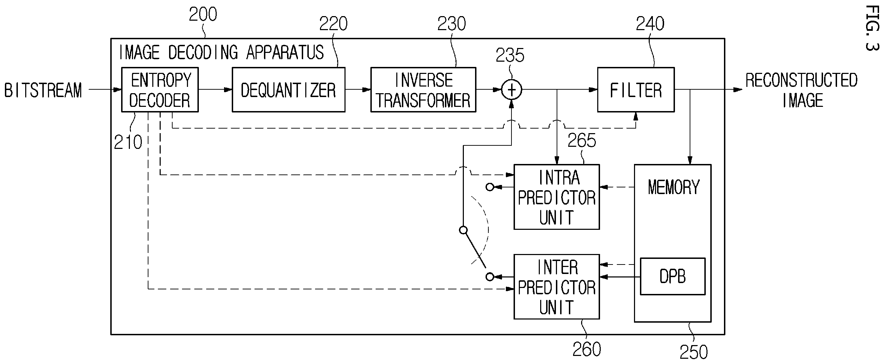

FIG. 3 is a view schematically showing an image decoding apparatus, to which an embodiment of the present disclosure is applicable.

As shown in FIG. 3, the image reception device 200 may include an entropy decoder 210, a dequantizer 220, an inverse transformer 230, an adder 235, a filter 240, a memory 250, an inter prediction unit 260 and an intra prediction unit 265. The inter prediction unit 260 and the intra prediction unit 265 may be collectively referred to as a "prediction unit". The dequantizer 220 and the inverse transformer 230 may be included in a residual processor.

All or at least some of a plurality of components configuring the image reception device 200 may be configured by a hardware component (e.g., a decoder or a processor) according to an embodiment. In addition, the memory 250 may include a decoded picture buffer (DPB) or may be configured by a digital storage medium.

The image reception device 200, which has received a bitstream including video/image information, may reconstruct an image by performing a process corresponding to a process performed by the image source device 100 of FIG. 2. For example, the image reception device 200 may perform decoding using a processing unit applied in the image encoding apparatus. Thus, the processing unit of decoding may be a coding unit, for example. The coding unit may be obtained by partitioning a coding tree unit or a largest coding unit. The reconstructed image signal decoded and output through the image reception device 200 may be reproduced through a reproducing apparatus (not shown).

The image reception device 200 may receive a signal output from the image encoding apparatus of FIG. 2 in the form of a bitstream. The received signal may be decoded through the entropy decoder 210. For example, the entropy decoder 210 may parse the bitstream to derive information (e.g., video/image information) necessary for image reconstruction (or picture reconstruction). The video/image information may further include information on various parameter sets such as an adaptation parameter set (APS), a picture parameter set (PPS), a sequence parameter set (SPS), or a video parameter set (VPS). In addition, the video/image information may further include general constraint information. The image decoding apparatus may further decode picture based on the information on the parameter set and/or the general constraint information. Signaled/received information and/or syntax elements described in the present disclosure may be decoded through the decoding procedure and obtained from the bitstream. For example, the entropy decoder 210 decodes the information in the bitstream based on a coding method such as exponential Golomb coding, CAVLC, or CABAC, and output values of syntax elements required for image reconstruction and quantized values of transform coefficients for residual. More specifically, the CABAC entropy decoding method may receive a bin corresponding to each syntax element in the bitstream, determine a context model using a decoding target syntax element information, decoding information of a neighboring block and a decoding target block or information of a symbol/bin decoded in a previous stage, and perform arithmetic decoding on the bin by predicting a probability of occurrence of a bin according to the determined context model, and generate a symbol corresponding to the value of each syntax element. In this case, the CABAC entropy decoding method may update the context model by using the information of the decoded symbol/bin for a context model of a next symbol/bin after determining the context model. The information related to the prediction among the information decoded by the entropy decoder 210 may be provided to the prediction unit (the inter prediction unit 260 and the intra prediction unit 265), and the residual value on which the entropy decoding was performed in the entropy decoder 210, that is, the quantized transform coefficients and related parameter information, may be input to the dequantizer 220. In addition, information on filtering among information decoded by the entropy decoder 210 may be provided to the filter 240. Meanwhile, a receiver (not shown) for receiving a signal output from the image encoding apparatus may be further configured as an internal/external element of the image reception device 200, or the receiver may be a component of the entropy decoder 210.

Meanwhile, the image decoding apparatus according to the present disclosure may be referred to as a video/image/picture decoding apparatus. The image decoding apparatus may be classified into an information decoder (video/image/picture information decoder) and a sample decoder (video/image/picture sample decoder). The information decoder may include the entropy decoder 210. The sample decoder may include at least one of the dequantizer 220, the inverse transformer 230, the adder 235, the filter 240, the memory 250, the inter prediction unit 160 or the intra prediction unit 265.

The dequantizer 220 may dequantize the quantized transform coefficients and output the transform coefficients. The dequantizer 220 may rearrange the quantized transform coefficients in the form of a two-dimensional block. In this case, the rearrangement may be performed based on the coefficient scanning order performed in the image encoding apparatus. The dequantizer 220 may perform dequantization on the quantized transform coefficients by using a quantization parameter (e.g., quantization step size information) and obtain transform coefficients.

The inverse transformer 230 may inversely transform the transform coefficients to obtain a residual signal (residual block, residual sample array).

The prediction unit may perform prediction on the current block and generate a predicted block including prediction samples for the current block. The prediction unit may determine whether intra prediction or inter prediction is applied to the current block based on the information on the prediction output from the entropy decoder 210 and may determine a specific intra/inter prediction mode (prediction technique).

It is the same as described in the prediction unit of the image source device 100 that the prediction unit may generate the prediction signal based on various prediction methods (techniques) which will be described later.

The intra prediction unit 265 may predict the current block by referring to the samples in the current picture. The description of the intra prediction unit 185 is equally applied to the intra prediction unit 265.

The inter prediction unit 260 may derive a predicted block for the current block based on a reference block (reference sample array) specified by a motion vector on a reference picture. In this case, in order to reduce the amount of motion information transmitted in the inter prediction mode, motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. For example, the inter prediction unit 260 may configure a motion information candidate list based on neighboring blocks and derive a motion vector of the current block and/or a reference picture index based on the received candidate selection information. Inter prediction may be performed based on various prediction modes, and the information on the prediction may include information indicating a mode of inter prediction for the current block.

The adder 235 may generate a reconstructed signal (reconstructed picture, reconstructed block, reconstructed sample array) by adding the obtained residual signal to the prediction signal (predicted block, predicted sample array) output from the prediction unit (including the inter prediction unit 260 and/or the intra prediction unit 265). If there is no residual for the block to be processed, such as when the skip mode is applied, the predicted block may be used as the reconstructed block. The description of the adder 155 is equally applicable to the adder 235. The adder 235 may be called a reconstructor or a reconstructed block generator. The generated reconstructed signal may be used for intra prediction of a next block to be processed in the current picture and may be used for inter prediction of a next picture through filtering as described below.

The filter 240 may improve subjective/objective image quality by applying filtering to the reconstructed signal. For example, the filter 240 may generate a modified reconstructed picture by applying various filtering methods to the reconstructed picture and store the modified reconstructed picture in the memory 250, specifically, a DPB of the memory 250. The various filtering methods may include, for example, deblocking filtering, a sample adaptive offset, an adaptive loop filter, a bilateral filter, and the like.

The (modified) reconstructed picture stored in the DPB of the memory 250 may be used as a reference picture in the inter prediction unit 260. The memory 250 may store the motion information of the block from which the motion information in the current picture is derived (or decoded) and/or the motion information of the blocks in the picture that have already been reconstructed. The stored motion information may be transmitted to the inter prediction unit 260 so as to be utilized as the motion information of the spatial neighboring block or the motion information of the temporal neighboring block. The memory 250 may store reconstructed samples of reconstructed blocks in the current picture and transfer the reconstructed samples to the intra prediction unit 265.

In the present disclosure, the embodiments described in the filter 160, the inter prediction unit 180, and the intra prediction unit 185 of the image source device 100 may be equally or correspondingly applied to the filter 240, the inter prediction unit 260, and the intra prediction unit 265 of the image reception device 200.

### Overview of image encoding/decoding procedure

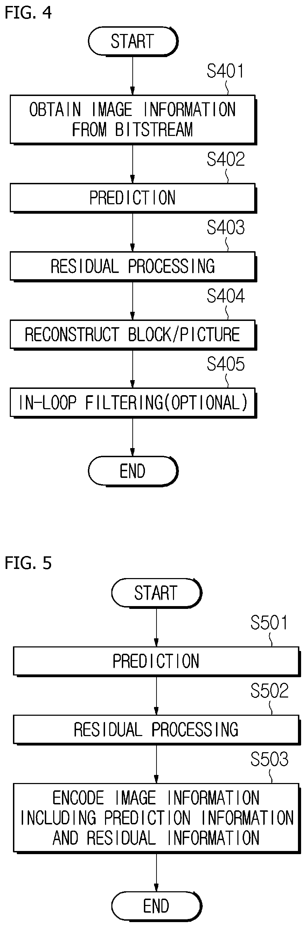

FIG. 4 is a view schematically showing an image decoding procedure.

In image/video coding, pictures constituting the image/video may be encoded/decoded according to a series of decoding orders. The picture order corresponding to the output order of the decoded picture may be set differently from the decoding order, and based on this, not only forward prediction but also backward prediction may be performed during inter prediction.

In FIG. 4, S401 may be performed in the entropy decoder of the above-described decoding apparatus, S402 may be performed in the prediction unit, S403 may be performed in the residual processor, S404 may be performed in the adder, and S405 may be performed in the filter. S401 may include an information decoding procedure described herein, S402 may include an inter/intra prediction procedure described herein, S403 may include a residual processing procedure described herein, and S404 may include a block/picture restoration procedure described herein, and S405 may include an in-loop filtering procedure described herein.

As shown in the above description, the picture decoding procedure of FIG. 4 may schematically include a procedure for obtaining image/video information (through decoding) from a bitstream (S401), a picture reconstruction procedure (S402 to S404), and an in-loop filtering procedure for a reconstructed picture (S405). The picture reconstruction procedure may be performed based on prediction samples and residual samples obtained through the inter/intra prediction (S402) and residual processing (S403, inverse quantization and inverse transformation of quantized transform coefficients) processes described herein. A modified reconstructed picture may be generated through an in-loop filtering procedure for the reconstructed picture generated through the picture reconstruction procedure, the modified reconstructed picture may be output as a decoded picture, and may be stored in the decoded picture buffer or memory of the decoding apparatus and used as a reference picture in the inter prediction procedure when decoding a picture later. In some cases, the in-loop filtering procedure may be omitted, in which case the reconstructed picture may be output as a decoded picture, and may also be stored in the decoded picture buffer or memory of the decoding apparatus to be used as a reference picture in the inter prediction procedure when decoding a picture later. The in-loop filtering procedure (S405) may include a deblocking filtering procedure, a sample adaptive offset (SAO) procedure, an adaptive loop filter (ALF) procedure, and/or a bi-lateral filter procedure, etc., as described above and some or all thereof may be omitted. In addition, one or some of the deblocking filtering procedure, sample adaptive offset (SAO) procedure, adaptive loop filter (ALF) procedure, and bi-lateral filter procedure may be applied sequentially, or all may be applied sequentially. For example, the SAO procedure may be performed after a deblocking filtering procedure is applied to the reconstructed picture. Alternative, for example, an ALF procedure may be performed after a deblocking filtering procedure is applied to the reconstructed picture. This may also be performed in the encoding apparatus as well.

FIG. 5 is a view schematically showing an image encoding procedure.

In FIG. 5, S501 may be performed in the prediction unit of the encoding apparatus, S520 may be performed in the residual processor, and S503 may be performed in the entropy encoder. S501 may include the inter/intra prediction procedure described herein, S502 may include the residual processing procedure described herein, and S503 may include the information encoding procedure described herein.

The picture encoding procedure may schematically include not only a procedure for encoding and outputting information for picture reconstruction (e.g., prediction information, residual information, partitioning information, etc.) in the form of a bitstream but also a procedure for generating a reconstructed picture for a current picture and a procedure (optional) for applying in-loop filtering to a reconstructed picture, as described above. The encoding apparatus may derive (modified) residual samples from a quantized transform coefficient through the dequantizer 140 and the inverse transformer, and generate the reconstructed picture based on the prediction samples which are output of S501 and the (modified) residual samples. The reconstructed picture generated in this way may be equal to the reconstructed picture generated in the decoding apparatus The modified reconstructed picture may be generated through the in-loop filtering procedure for the reconstructed picture, may be stored in the decoded picture buffer or memory, and may be used as a reference picture in the inter prediction procedure when encoding the picture later, similarly to the decoding apparatus. As described above, in some cases, some or all of the in-loop filtering procedure may be omitted. When the in-loop filtering procedure is performed, (in-loop) filtering related information (parameter) may be encoded in the entropy encoder and output in the form of a bitstream, and the decoding apparatus may perform the in-loop filtering procedure using the same method as the encoding apparatus based on the filtering related information.

Through such an in-loop filtering procedure, noise occurring during image/video coding, such as blocking artifact and ringing artifact, may be reduced and subjective/objective visual quality may be improved. In addition, by performing the in-loop filtering procedure in both the encoding apparatus and the decoding apparatus, the encoding apparatus and the decoding apparatus may derive the same prediction result, picture coding reliability may be increased and the amount of data to be transmitted for picture coding may be reduced.

As described above, the picture reconstruction procedure may be performed not only in the decoding apparatus but also in the encoding apparatus. A reconstructed block may be generated based on intra prediction/inter prediction in units of blocks, and a reconstructed picture including reconstructed blocks may be generated. When a current picture/slice/tile group is an I picture/slice/tile group, blocks included in the current picture/slice/tile group may be reconstructed based on only intra prediction. Meanwhile, when the current picture/slice/tile group is a P or B picture/slice/tile group, blocks included in the current picture/slice/tile group may be reconstructed based on intra prediction or inter prediction. In this case, inter prediction may be applied to some blocks in the current picture/slice/tile group and intra prediction may be applied to the remaining blocks. The color component of the picture may include a luma component and a chroma component and the methods and embodiments of the present disclosure are applicable to the luma component and the chroma component unless explicitly limited in the present disclosure.

### Overview of coding layer and structure

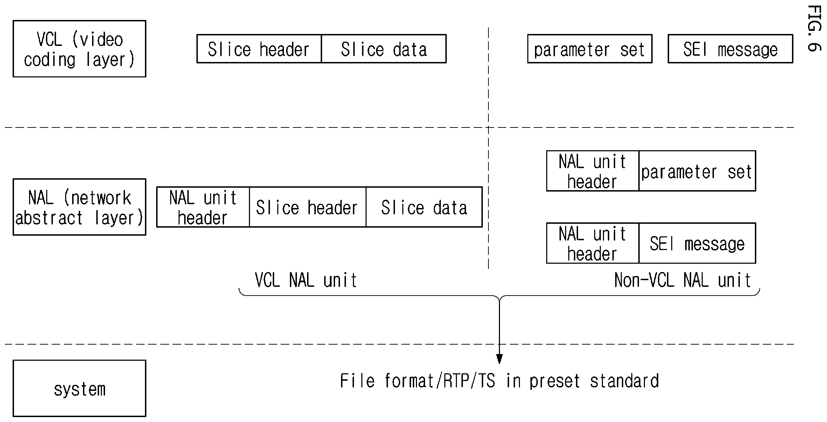

FIG. 6 is a view schematically illustrating a coding layer and structure.

A coded video/image according to the present disclosure may be processed, for example, according to a coding layer and structure which will be described below.

The coded image is classified into a video coding layer (VCL) for an image/video decoding process and handling itself, a lower system for transmitting and storing encoded information, and a network abstraction layer (NAL) present between the VCL and the lower system and responsible for a network adaptation function.

In the VCL, VCL data including compressed image data (slice data) may be generated or a supplemental enhancement information (SEI) message additionally required for a decoding process of an image or a parameter set including information such as a picture parameter set (PPS), a sequence parameter set (SPS) or a video parameter set (VPS) may be generated.

In the NAL, header information (NAL unit header) may be added to a raw byte sequence payload (RBSP) generated in the VCL to generate a NAL unit. In this case, the RBSP refers to slice data, a parameter set, an SEI message generated in the VCL. The NAL unit header may include NAL unit type information specified according to RBSP data included in a corresponding NAL unit.

As shown in the figure, the NAL unit may be classified into a VCL NAL unit and a non-VCL NAL unit according to the type of the RBSP generated in the VCL. The VCL NAL unit may mean a NAL unit including information on an image (slice data), and the Non-VCL NAL unit may mean a NAL unit including information (parameter set or SEI message) required to decode an image.

The VCL NAL unit and the Non-VCL NAL unit may be attached with header information and transmitted through a network according to the data standard of the lower system. For example, the NAL unit may be modified into a data format of a predetermined standard, such as H.266/WC file format, RTP (Real-time Transport Protocol) or TS (Transport Stream), and transmitted through various networks.

As described above, in the NAL unit, a NAL unit type may be specified according to the RBSP data structure included in the corresponding NAL unit, and information on the NAL unit type may be stored in a NAL unit header and signaled.

For example, this may be largely classified into a VCL NAL unit type and a non-VCL NAL unit type depending on whether the NAL unit includes information on an image (slice data). The VCL NAL unit type may be classified according to the property and type of the picture included in the VCL NAL unit, and the Non-VCL NAL unit type may be classified according to the type of a parameter set.

The following is an example of the NAL unit type specified according to the type of the parameter set included in the Non-VCL NAL unit type.
- APS (Adaptation Parameter Set) NAL unit: Type for NAL unit including APS
- DPS (Decoding Parameter Set) NAL unit: Type for NAL unit including DPS
- VPS(Video Parameter Set) NUT: Type for NAL unit including VPS
- SPS(Sequence Parameter Set) NUT : Type for NAL unit including SPS
- PPS(Picture Parameter Set) NUT : Type for NAL unit including PPS

The above-described NAL unit types may have syntax information for a NAL unit type, and the syntax information may be stored in a NAL unit header and signaled. For example, the syntax information may be nal_unit_type, and the NAL unit types may be specified through nal_unit_type values.

The slice header (slice header syntax) may include information/parameters commonly applicable to the slice. The APS (APS syntax) or PPS (PPS syntax) may include information/parameters commonly applicable to one or more slices or pictures. The SPS (SPS syntax) may include information/parameters commonly applicable to one or more sequences. The VPS (VPS syntax) may information/parameters commonly applicable to multiple layers. The DPS (DPS syntax) may include information/parameters commonly applicable to all videos. The DPS may include information/parameters related to concatenation of a coded video sequence (CVS). In the present disclosure, high level syntax (HLS) may include at least one of the APS syntax, PPS syntax, SPS syntax, VPS syntax, DPS syntax, or slice header syntax.

In the present disclosure, image/video information encoded from the encoding apparatus to the decoding apparatus and signaled in the form of a bitstream may include not only information related to partitioning within a picture, intra/inter prediction information, residual information, in-loop filtering information but also information included in the slice header, information included in the APS, information included in the PPS, information included in the SPS, and/or information included in the VPS.

### Signalling of multilayer information in VPS

Hereinafter, signaling of multilayer information in the VPS will be described in detail.

For a multi layers bitstream, such as dependency among the layers, the available sets of layers that can be decoded, which is also referred as output layer set (OLS), PTL (Profile, Tier, and Level) information for the OLSs, DPB information, HRD information, as shown below:

**[Table 1]**

| | |
|---|---|
| video_parameter_ set_rbsp( ) { | **Descriptor** |
| **vps**_**video**_**parameter**_**set**_**id** | u(4) |
| **vps**_**max**_**layers**_**minus1** | u(6) |
| **vps**_**max_sublayers**_**minus1** | u(3) |
| if( vps_max_layers_minus1 > 0 && vps_max_sublayers_minus1 > 0 ) | |
| **vps**_**default_ptl**_**dpb**_**hrd**_**max_tid_flaq** | u(1) |
| if( vps_max_layers_minus1 > 0 ) | |
| **vps**_**all_independent**_**layers**_**flaq** | u(1) |
| for( i = 0; i <= vps_max_layers_minus1; i++ ) { | |
| **vps**_**layer**_**id[** i ] | u(6) |
| if( i > 0 && !vps_all_independent_layers_flag ) { | |
| **vps**_**independent**_**layer_flag**[ i ] | u(1) |
| if( !vps_independent_layer flag[ i ] ) { | |
| **vps**_**max_tid_ref**_**present**_**flagB[** i ] | u(1) |
| for( j = 0; j < i; j++ ) { | |
| **vps**_**direct_ref_layer_flag**[ i ][ j ] | u(1) |
| if( vps_max_tid_ref_present_flag[ i ] && | |
| vps_direct_ref_layer_flag[ i ][ j ] ) | |
| **vps**_**max_tid_il_ref_pics**_**plus1**[ i ][ j ] | u(3) |
| } | |
| } | |
| } | |
| } | |
| if( vps_max_layers_minus1 > 0 ) { | |
| if( vps_all_independent_layers_flag ) | |
| **vps**_**each**_**layer**_**is_an_ols_flag** | u(1) |
| if( !vps_each_layer_is_an_ols_flag ) { | |
| if( !vps_all_independent_layers_flag ) | |
| **vps**_**ols_mode_idc** | u(2) |
| if( vps_ols_mode_idc = = 2 ) { | |
| **vps**_**num_output**_**layer**_**sets**_**minus1** | u(8) |
| for( i = 1; i <= vps_num_output_layer_sets_minus1; i ++) | |
| for( j = 0; j <= vps_max_layers_minus1; i++ ) | |
| **vps**_**ols**_**output**_**layer**_**flag**[ i ][ j ] | u(1) |
| } | |
| } | |
| **vps**_**num**_**ptls**_**minus1** | u(8) |
| } | |
| for( i = 0; i <= vps_num_ptls_minus1; i++ ) { | |
| if( i > 0 ) | |
| **vps_pt_present_flag**[ i ] | u(1) |
| if( !vps_default_ptl_dpb_hrd_max_tid_flag ) | |
| **vps**_**ptl_max**_**tid**[ i ] | u(3) |
| } | |
| while( !byte_aligned( ) ) | |
| **vps**_**ptl_alignment**_**zero_bit** /* equal to 0 */ | f(1) |
| for( i = 0; i <= vps_num_ptls_minus1; i++ ) | |
| profile_tier_level( vps_pt_present_flag[ i ], vps_ptl_max_tid[ i ] ) | |
| for( i = 0; i < TotalNumOlss; i++ ) | |
| if( vps_num_ptls_minus1 > 0 && vps_num_ptls_minus1 + 1 != | |
| TotalNumOlss) | |
| **vps**_**ols_ptl_idx**[i ] | u(8) |
| if( !vps_each_layer_is_an_ols_flag ) { | |
| **vps**_**num**_**dpb**_**params**_**minus1** | ue(v) |
| if( vps_max_sublayers_minus1 > 0 ) | |
| **vps**_**sublayer**_**dpb**_**params**_**present**_**flag** | u(1) |
| for( i = 0; i < VpsNumDpbParams; i++ ) { | |
| if( !vps_default_ptl_dpb_hrd_max_tid_flag ) | |
| **vps**_**dpb**_**max**_**tid**[ i ] | u(3) |
| dpb_parameters( vps_dpb_max_tid[ i ], | |
| vps_sublayer_dpb_params_present_flag ) | |
| } | |
| for( i = 0; i < NumMultiLayerOlss; i++ ) { | |
| **vps**_**ols**_**dpb**_**pic**_**width**[ i ] | ue(v) |
| **vps**_**ols**_**dpb**_**pic**_**height**[ i ] | ue(v) |
| **vps_ols_dpb_chroma_format**[ i ] | u(2) |
| **vps**_**ols**_**dpb**_**bitdepth**_**minus8**[ i ] | ue(v) |
| if( VpsNumDpbParams > 1 && VpsNumDpbParams != | |
| NumMultiLayerOlss ) | |
| **vps**_**ols**_**dpb**_**params_idx**[ i ] | ue(v) |
| } | |
| **vps**_**general**_**hrd**_**params**_**present**_**flag** | u(1) |
| if( vps_general_hrd_params_present_flag ) { | |
| qeneral_hrd_parameters( ) | |
| if( vps_max_sublayers_minus1 > 0 ) | |
| **vps**_**sublayer**_**cpb**_**params**_**present**_**flag** | u(1) |
| **vps**_**num_ols_hrd**_**params**_**minus1** | ue(v) |
| for( i = 0; i <= vps_num_ols_hrd_params_minus1; i++ ) { | |
| if( !vps_default_ptl_dpb_hrd_max_tid_flag ) | |
| **vps**_**hrd_max_tid**[ i ] | u(3) |
| firstSubLayer = vps_sublayer _cpb_params_present_flag ? 0 : | |
| vps_hrd_max_tid[ i ] | |
| ols_hrd_parameters( firstSubLayer, vps_hrd_max_tid[ i ] ) | |
| } | |
| if( vps_num_ols_hrd_params_minus1 > 0 && | |
| vps_num_ols_hrd_params_minus1 + 1 != | |
| NumMultiLayerOlss) | |
| for( i = 0; i < NumMultiLayerOlss; i++ ) | |
| **vps**_**ols_hrd_idx**[ i ] | ue(v) |
| } | |
| } | |
| **vps_extension_flag** | u(1) |
| if( vps_extension_flag ) | |
| while( more_rbsp_data( ) ) | |
| **vps_extension_data_flag** | u(1) |
| rbsp_trailing_bits( ) | |
| } | |

A VPS RBSP shall be available to the decoding process prior to it being referenced, included in at least one AU with TemporalId equal to 0 or provided through external means.

All VPS NAL units with a particular value of vps_video_parameter_set_id in a CVS shall have the same content.

In Table 1, **vps**_**video_parameter**_**set**_**id** provides an identifier for the VPS for reference by other syntax elements. The value of vps_video_parameter_set_id shall be greater than 0.

**vps**_**max**_**layers**_**minus1** plus 1 specifies the number of layers specified by the VPS, which is the maximum allowed number of layers in each CVS referring to the VPS.

**vps_max_sublayers_minus1** plus 1 specifies the maximum number of temporal sublayers that may be present in a layer specified by the VPS. The value of vps_max_sublayers_minus1 shall be in the range of 0 to 6, inclusive.

**vps_default_ptl_dpb_hrd_max_tid_flag** equal to 1 specifies that the the syntax elements vps_ptl_max_tid[ i ], vps_dpb_max_tid[ i ], and vps_ptl_max_tid[ i ] are not present and are inferred to be equal to the default value vps_max_sublayers_minus1. vps_default_ptl_dpb_hrd_max_tid_flag equal to 0 specifies that the syntax elements vps_ptl_max_tid[ i ], vps_dpb_max_tid[ i ], and vps_ptl_max_tid[ i ] are present. When not present, the value of vps_default_ptl_dpb_hrd_max_tid_flag is inferred to be equal to 1.

**vps_all_independent_layers_flag** equal to 1 specifies that all layers specified by the VPS are independently coded without using inter-layer prediction. vps_all_independent_layers_flag equal to 0 specifies that one or more of the layers specified by the VPS may use inter-layer prediction. When not present, the value of vps_all_independent_layers_flag is inferred to be equal to 1.

**vps**_**layer**_**id**[ i ] specifies the nuh_layer_id value of the i-th layer. For any two non-negative integer values of m and n, when m is less than n, the value of **vps**_**layer**_**id**[ m ] shall be less than **vps**_**layer**_**id**[ n ].

**vps**_**independent**_**layer**_**flag**[ i ] equal to 1 specifies that the layer with index i does not use inter-layer prediction. vps_independent_layer_flag[ i ] equal to 0 specifies that the layer with index i may use inter-layer prediction and the syntax elements vps_direct_ref_layer_flag[ i ][ j ] for j in the range of 0 to i - 1, inclusive, are present in VPS. When not present, the value of vps_independent_layer_flag[ i ] is inferred to be equal to 1.

**vps_max_tid_ref_present_flag**[ i ] equal to 1 specifies that the syntax element vps_max_tid_il_ref_pics_plus1[ i ][ j ] is present. vps_max_tid_ref_present_flag[ i ] equal to 0 specifies that the syntax element vps_max tid_il_ref pics_plus1[ i ][ j ] is not present.

**vps_direct_ref_layer_flag**[ i ][ j ] equal to 0 specifies that the layer with index j is not a direct reference layer for the layer with index i. vps_direct_ref_layer_flag [ i ][ j ] equal to 1 specifies that the layer with index j is a direct reference layer for the layer with index i. When vps_direct_ref_layer_flag[ i ][ j ] is not present for i and j in the range of 0 to vps_max_layers_minus1, inclusive, it is inferred to be equal to 0. When **vps**_**independent**_**layer**_**flag**[ i ] is equal to 0, there shall be at least one value of j in the range of 0 to i - 1, inclusive, such that the value of vps_direct_ref_layer_flag[ i ][ j ] is equal to 1.

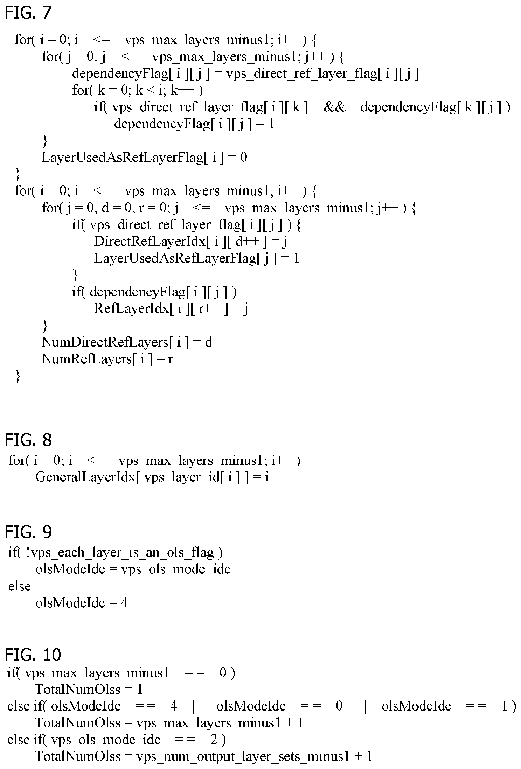

The variables NumDirectRefLayers[ i ], DirectRefLayerIdx[ i ][ d ], NumRefLayers[ i ], RefLayerIdx[ i ][ r ], and LayerUsedAsRefLayerFlag[ j ] are derived as shown in FIG. 7.

The variable GeneralLayerIdx[ i ], specifying the layer index of the layer with nuh_layer_id equal to vps**_**layer**_**id[ i ], is derived as shown in FIG. 8.

For any two different values of i and j, both in the range of 0 to vps_max_layers_minus1, inclusive, when dependencyFlag[ i ][ j ] equal to 1, it is a requirement of bitstream conformance that the values of sps_chroma_format_idc and sps_bitdepth_minus8 that apply to the i-th layer shall be equal to the values of sps_chroma_format_idc and sps_bitdepth_minus8, respectively, that apply to the j-th layer.

**vps_max_tid_il_ref_pics_plus1**[ i ][ j ] equal to 0 specifies that the pictures of the j-th layer that are neither IRAP pictures nor GDR pictures with ph_recovery_poc_cnt equal to 0 are not used as ILRPs for decoding of pictures of the i-th layer. vps_max tid_il_ref pics_plus1[ i ][ j ] greater than 0 specifies that, for decoding pictures of the i-th layer, no picture from the j-th layer with TemporalId greater than vps_max tid_il_ref pics_plus1[ i ][ j ] - 1 is used as ILRP. When not present, the value of vps_max tid_il_ref pics_plus1[ i ][ j ] is inferred to be equal to vps_max_sublayers_minus1 + 1.

**vps_each_layer_is_an_ols_flag** equal to 1 specifies that each OLS contains only one layer and each layer specified by the VPS is an OLS with the single included layer being the only output layer. vps_each_layer_is_an_ols_flag equal to 0 that at least one OLS contains more than one layer. If vps_max_layers_minus1 is equal to 0, the value of vps_each_layer_is_an_ols_flag is inferred to be equal to 1. Otherwise, when vps_all_independent_layers_flag is equal to 0, the value of vps_each_layer_is_an_ols_flag is inferred to be equal to 0.

**vps ols_mode_idc** equal to 0 specifies that the total number of OLSs specified by the VPS is equal to vps_max_layers_minus1 + 1, the i-th OLS includes the layers with layer indices from 0 to i, inclusive, and for each OLS only the highest layer in the OLS is an output layer.

vps_ols_mode_idc equal to 1 specifies that the total number of OLSs specified by the VPS is equal to vps_max_layers_minus1 + 1, the i-th OLS includes the layers with layer indices from 0 to i, inclusive, and for each OLS all layers in the OLS are output layers.

vps_ols_mode_idc equal to 2 specifies that the total number of OLSs specified by the VPS is explicitly signalled and for each OLS the output layers are explicitly signalled and other layers are the layers that are direct or indirect reference layers of the output layers of the OLS.

The value of vps_ols_mode_idc shall be in the range of 0 to 2, inclusive. The value 3 of vps_ols_mode_idc is reserved for future use by ITU-T | ISO/IEC

When vps_all_independent_layers_flag is equal to 1 and vps_each_layer_is_an_ols_flag is equal to 0, the value of vps_ols_mode_idc is inferred to be equal to 2.

**vps_num_output_layer_sets_minus1** plus 1 specifies the total number of OLSs specified by the VPS when vps_ols_mode_idc is equal to 2.

The variable olsModeIdc is derived as shown in FIG. 9.

The variable TotalNumOlss, specifying the total number of OLSs specified by the VPS, is derived as shown in FIG. 10.

**vps_ols_output_layer_flag**[ i ][ j ] equal to 1 specifies that the layer with nuh_layer_id equal to **vps**_**layer**_**id**[ j ] is an output layer of the i-th OLS when vps_ols_mode_idc is equal to 2. vps_ols_output_layer_flag[ i ][ j ] equal to 0 specifies that the layer with nuh_layer_id equal to vps**_**layer**_**id[ j ] is not an output layer of the i-th OLS when vps_ols_mode_idc is equal to 2.

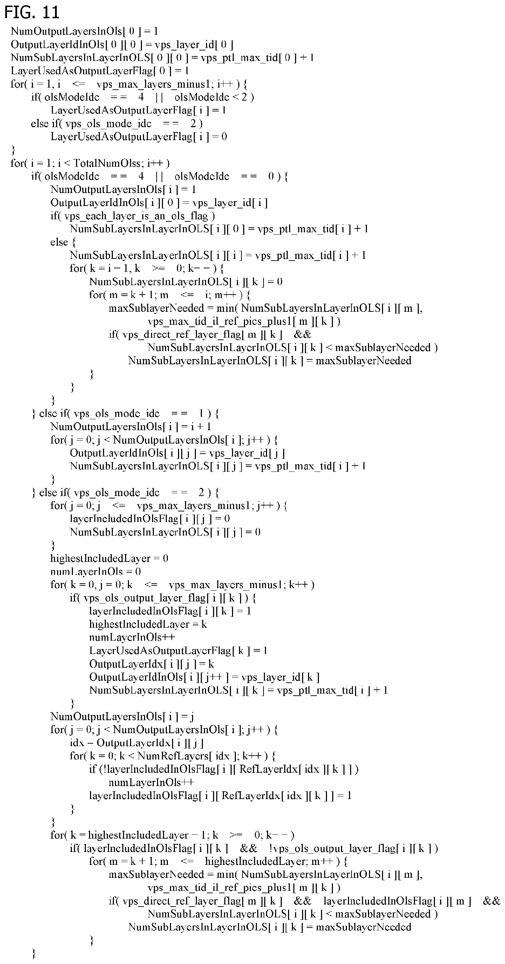

The variable NumOutputLayersInOls[ i ], specifying the number of output layers in the i-th OLS, the variable NumSubLayersInLayerInOLS[ i ][ j ], specifying the number of sublayers in the j-th layer in the i-th OLS, the variable OutputLayer-IdInOls[ i ][ j ], specifying the nuh_layer_id value of the j-th output layer in the i-th OLS, and the variable LayerUsedAsOutputLayerFlag[ k ], specifying whether the k-th layer is used as an output layer in at least one OLS, are derived as shown in FIG. 11.

For each value of i in the range of 0 to vps_max_layers_minus1, inclusive, the values of LayerUsedAsRefLayerFlag[ i ] and LayerUsedAsOutputLayerFlag[ i ] shall not be both equal to 0. In other words, there shall be no layer that is neither an output layer of at least one OLS nor a direct reference layer of any other layer.

For each OLS, there shall be at least one layer that is an output layer. In other words, for any value of i in the range of 0 to TotalNumOlss - 1, inclusive, the value of NumOutputLayersInOls[ i ] shall be greater than or equal to 1.

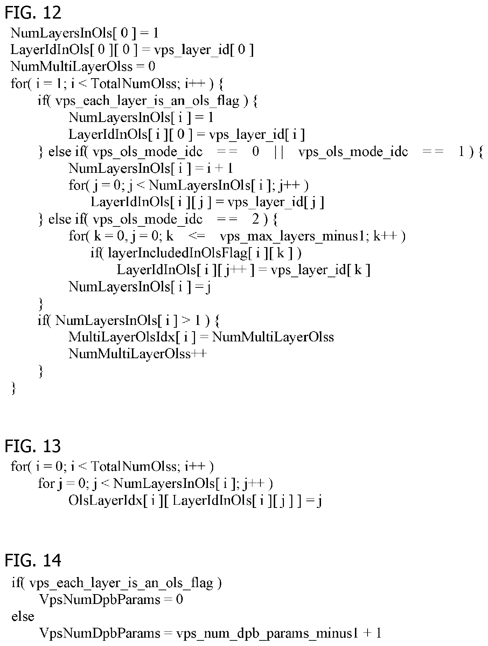

The variable NumLayersInOls[ i ], specifying the number of layers in the i-th OLS, the variable LayerIdInOls[ i ][ j ], specifying the nuh_layer_id value of the j-th layer in the i-th OLS, the variable NumMultiLayerOlss, specifying the number of multi-layer OLSs (i.e., OLSs that contain more than one layer), and the variable MultiLayerOlsIdx[ i ], specifying the index to the list of multi-layer OLSs for the i-th OLS when NumLayersInOls[ i ] is greater than 0, are derived as shown in FIG. 12.

NOTE 1 - The 0-th OLS contains only the lowest layer (i.e., the layer with nuh_layer_id equal to vps**_**layer**_**id[ 0 ]) and for the 0-th OLS the only included layer is output.

The variable OlsLayerIdx[ i ][ j ], specifying the OLS layer index of the layer with nuh_layer_id equal to LayerIdInOls[ i ][ j ], is derived as shown in FIG. 13.

The lowest layer in each OLS shall be an independent layer. In other words, for each i in the range of 0 to TotalNumOlss - 1, inclusive, the value of vps**_**independent**_**layer**_**flag[ GeneralLayerIdx[ LayerIdInOls[ i ][ 0 ] ] ] shall be equal to 1.

Each layer shall be included in at least one OLS specified by the VPS. In other words, for each layer with a particular value of nuh_layer_id nuhLayerId equal to one of vps**_**layer**_**id[ k ] for k in the range of 0 to vps_max_layers_minus1, inclusive, there shall be at least one pair of values of i and j, where i is in the range of 0 to TotalNumOlss - 1, inclusive, and j is in the range of NumLayersInOls[ i ] - 1, inclusive, such that the value of LayerIdInOls[ i ][ j ] is equal to nuhLayerId.

**vps_num_ptls_minus1** plus 1 specifies the number of profile_tier_level( ) syntax structures in the VPS. The value of vps_num_ptls_minus1 shall be less than TotalNumOlss. When not present, the value of vps_num_ptls_minus1 is inferred to be equal to 0.

**vps_pt_present_flag**[ i ] equal to 1 specifies that profile, tier, and general constraints information are present in the i-th profile_tier_level( ) syntax structure in the VPS. **vps_pt_present_flag**[ i ] equal to 0 specifies that profile, tier, and general constraints information are not present in the i-th profile_tier_level( ) syntax structure in the VPS. The value of vps_pt_present_flag[ 0 ] is inferred to be equal to 1. When vps_pt_present_flag[ i ] is equal to 0, the profile, tier, and general constraints information for the i-th profile_tier_level( ) syntax structure in the VPS are inferred to be the same as that for the ( i - 1 )-th profile_tier_level( ) syntax structure in the VPS.

**vps_ptl_max_tid**[ i ] specifies the TemporalId of the highest sublayer representation for which the level information is present in the i-th profile_tier_level( ) syntax structure in the VPS. The value of vps_ptl_max_tid[ i ] shall be in the range of 0 to vps_max_sublayers_minus1, inclusive. When not present, the value of vps_ptl_max_tid[ i ] is inferred to be equal to vps_max_sublayers_minus1.

**vps_ptl_alignment_zero_bit** shall be equal to 0.

**vps_ols_ptl_idx**[ i ] specifies the index, to the list of profile_tier_level( ) syntax structures in the VPS, of the profile_tier_level( ) syntax structure that applies to the i-th OLS. When present, the value of vps_ols_ptl_idx[ i ] shall be in the range of 0 to vps_num_ptls_minus1, inclusive.

When not present, the value of vps_ols_ptl_idx[ i ] is inferred as follows:
- If vps_num_ptls_minus1 is equal to 0, the value of vps_ols_ptl_idx[ i ] is inferred to be equal to 0.
- Otherwise (vps_num_ptls_minus1 is greater than 0 and vps_num_ptls_minus1 + 1 is equal to TotalNumOlss), the value of vps_ols_ptl_idx[ i ] is inferred to be equal to i.

When NumLayersInOls[ i ] is equal to 1, the profile_tier_level( ) syntax structure that applies to the i-th OLS is also present in the SPS referred to by the layer in the i-th OLS. It is a requirement of bitstream conformance that, when NumLayersInOls[ i ] is equal to 1, the profile_tier_level( ) syntax structures signalled in the VPS and in the SPS for the i-th OLS shall be identical.

Each profile_tier_level( ) syntax structure in the VPS shall be referred to by at least one value of vps_ols_ptl_idx[ i ] for i in the range of 0 to TotalNumOlss - 1, inclusive.

**vps_num_dpb_params_minus1** plus 1, when present, specifies the number of dpb_parameters( ) syntax strutcures in the VPS. The value of vps_num_dpb_params_minus1 shall be in the range of 0 to NumMultiLayerOlss - 1, inclusive.

The variable VpsNumDpbParams, specifying the number of dpb_parameters( ) syntax strutcures in the VPS, is derived as shown in FIG. 14.

**vps_sublayer_dpb_params_present_flag** is used to control the presence of max_dec_pic_buffering_minus1[ ], max_num_reorder_pics[ ], and max_latency_increase_plus1[ ] syntax elements in the dpb_parameters( ) syntax strucures in the VPS. When not present, vps_sub dpb_params_info_present flag is inferred to be equal to 0.

**vps_dpb_max_tid**[ i ] specifies the TemporalId of the highest sublayer representation for which the DPB parameters may be present in the i-th dpb_parameters( ) syntax strutcure in the VPS. The value of vps_dpb_max_tid[ i ] shall be in the range of 0 to vps_max_sublayers_minus1, inclusive. When not present, the value of vps_dpb_max_tid[ i ] is inferred to be equal to vps_max_sublayers_minus1.

**vps**_**ols**_**dpb**_**pic**_**width**[ i ] specifies the width, in units of luma samples, of each picture storage buffer for the i-th multi-layer OLS.

**vps**_**ols**_**dpb_pic_height**[ i ] specifies the height, in units of luma samples, of each picture storage buffer for the i-th multi-layer OLS.

**vps_ols_dpb_chroma_format**[ i ] specifies the greatest allowed value of sps_chroma_format_idc for all SPSs that are referred to by CLVSs in the CVS for the i-th multi-layer OLS.

**vps_ols_dpb_bitdepth_minus8**[ i ] specifies the greatest allowed value of sps_bitdepth_minus8 for all SPSs that are referred to by CLVSs in the CVS for the i-th multi-layer OLS.

NOTE 2 - For decoding the i-th multi-layer OLS, the deoder can safely allocate memory for the DPB according to the values of the syntax elements
vps_ols_dpb_pic_width[ i ], vps_ols_dpb_pic_height[ i ],
vps_ols_dpb_chroma_format[ i ], and vps_ols_dpb_bitdepth_minus8[ i ].

**vps_ols_dpb_params_idx**[ i ] specifies the index, to the list of dpb_parameters( ) syntax structures in the VPS, of the dpb_parameters( ) syntax structure that applies to the i-th multi-layer OLS. When present, the value of vps_ols_dpb_params_idx[ i ] shall be in the range of 0 to VpsNumDpbParams - 1, inclusive.

When vps_ols_dpb_params_idx[ i ] is not present, it is inferred as follows:
- If VpsNumDpbParams is equal to 1, the value of
   vps_ols_dpb_params_idx[ i ] to be equal to 0.
- Otherwise (VpsNumDpbParams is greater than 1 and equal to NumMultiLayerOlss), the value of vps_ols_dpb_params_idx[ i ] is inferred to be equal to i.

For a single-layer OLS, the applicable dpb_parameters( ) syntax structure is present in the SPS referred to by the layer in the OLS.

Each dpb_parameters( ) syntax structure in the VPS shall be referred to by at least one value of vps_ols_dpb_params_idx[ i ] for i in the range of 0 to NumMultiLayerOlss - 1, inclusive.

**vps_general_hrd_params_present_flag** equal to 1 specifies that the VPS contains a general_hrd_parameters( ) syntax structure and other HRD parameters. vps_general_hrd_params_present_flag equal to 0 specifies that the VPS does not contain a general_hrd_parameters( ) syntax structure or other HRD parameters.

When NumLayersInOls[ i ] is equal to 1, the general_hrd_parameters( ) syntax structure and the ols_hrd_parameters( ) syntax structure that apply to the i-th OLS are present in the SPS referred to by the layer in the i-th OLS.

**vps_sublayer_cpb_params_present_flag** equal to 1
specifies that the i-th ols_hrd_parameters( ) syntax structure in the VPS contains HRD parameters for the sublayer representations with TemporalId in the range of 0 to vps_hrd_max_tid[ i ], inclusive.
vps_sublayer_cpb_params_present_flag equal to 0 specifies that the i-th ols_hrd_parameters( ) syntax structure in the VPS contains HRD parameters for the sublayer representation with TemporalId equal to vps_hrd_max_tid[ i ] only. When vps_max_sublayers_minus1 is equal to 0, the value of
vps_sublayer_cpb_params_present_flag is inferred to be equal to 0.

When vps_sublayer_cpb_params_present_flag is equal to 0, the HRD parameters for the sublayer representations with TemporalId in the range of 0 to vps_hrd_max_tid[ i ] - 1, inclusive, are inferred to be the same as that for the sublayer representation with TemporalId equal to vps_hrd_max_tid[ i ].

These include the HRD parameters starting from the
fixed_pic_rate_general_flag[ i ] syntax element till the sublayer_hrd_parameters( i ) syntax structure immediately under the condition "if( general_vcl_hrd_params_present_flag )" in the ols_hrd_parameters syntax structure.

**vps_num_ols_hrd_params_minus1** plus 1 specifies the number of ols_hrd_parameters( ) syntax structures present in the VPS when vps_general_hrd_params_present flag is equal to 1. The value of vps_num_ols_hrd_params_minus1 shall be in the range of 0 to NumMultiLayerOlss - 1, inclusive.

**vps_hrd_max_tid**[ i ] specifies the TemporalId of the highest sublayer representation for which the HRD parameters are contained in the i-th ols_hrd_parameters( ) syntax structure. The value of vps_hrd_max_tid[ i ] shall be in the range of 0 to vps_max_sublayers_minus1, inclusive. When not present, the value of vps_hrd_max_tid[ i ] is inferred to be equal to vps_max_sublayers_minus1.

**vps**_**ols_hrd_idx**[ i ] specifies the index, to the list of ols_hrd_parameters( ) syntax structures in the VPS, of the ols_hrd_parameters( ) syntax structure that applies to the i-th multi-layer OLS. The value of vps_ols_hrd_idx[ i ] shall be in the range of 0 to vps_num_ols_hrd_params_minus1, inclusive.

When vps_ols_hrd_idx[ i ] is not present, it is inferred as follows:
- If vps_num_ols_hrd_params_minus1 is equal to 0, the value of vps_ols_hrd_idx[[ i ] is inferred to be equal to 0.
- Otherwise (vps_num_ols_hrd_params_minus1 + 1 is greater than 1 and equal to NumMultiLayerOlss), the value of vps_ols_hrd_idx[ i ] is inferred to be equal to i.

For a single-layer OLS, the applicable ols_hrd_parameters( ) syntax structure is present in the SPS referred to by the layer in the OLS.

Each ols_hrd_parameters( ) syntax structure in the VPS shall be referred to by at least one value of vps_ols_hrd_idx[ i ] for i in the range of 1 to NumMultiLayerOlss - 1, inclusive.

**vps_extension_flag** equal to 0 specifies that no vps_extension_data_flag syntax elements are present in the VPS RBSP syntax structure. vps_extension_flag equal to 1 specifies that there may be vps_extension_data_flag syntax elements present in the VPS RBSP syntax structure.

**vps_extension_data_flag** may have any value. Its presence and value do not affect decoder conformance to profiles specified in this version of this Specification. Decoders conforming to this version of this Specification shall ignore all vps_extension_data_flag syntax elements.

### VPS and SPS

Hereinafter, signaling of a video parameter set (VPS) and a sequence parameter set (SPS) will be described.

The presence of VPS is optional for bitstreams with single layer. When VPS is not present, the value of syntax element sps_video_parameter_set_id is equal to 0 and the values of some variables are inferred as described below.

When sps_video_parameter_set_id is equal to 0, the following applies:
- The SPS does not refer to a VPS, and no VPS is referred to when decoding each CLVS referring to the SPS.
- The value of vps_max_layers_minus1 is inferred to be equal to 0.
- The value of vps_max_sublayers_minus1 is inferred to be equal to 6.
- The CVS shall contain only one layer (i.e., all VCL NAL unit in the CVS shall have the same value of nuh_layer_id).
- The value of GeneralLayerIdx[ nuh_layer_id ] is inferred to be equal to 0.
- The value of
   vps_independent_layer_flag[ GeneralLayerIdx[ nuh_layer_id ] ] is inferred to be equal to 1.

### Overview of SEI message

Hereinafter, scalability dimension information (SDI) SEI message syntax will be described with reference to Table 2 below.

**Table 2**

| | |
|---|---|
| scalability_dimension_info( payloadSize ) { | **Descriptor** |
| **sdi_max**_**layers**_**minus1** | u(6) |
| **sdi_multiview_info_flag** | u(1) |
| **sdi_auxiliary**_**info_flag** | u(1) |
| if( sdi_multiview_info_flag \| \| sdi_auxiliary_info_flag ) { | |
| if( sdi_multiview_info_flag ) | |
| **sdi_view_id_len** | u(4) |
| for( i = 0; i <= sdi_max_layers_minus1; i++ ) { | |
| if( sdi_multiview_info_flag ) | |
| **sdi_view_id_val**[ i ] | u(v) |
| if( sdi_auxiliary_info_flag ) | |
| **sdi_aux_id**[ i ] | u(8) |
| } | |
| } | |
| } | |

Hereinafter, scalability dimension information (SDI) SEI message semantics will be described.

The scalability dimension information SEI message provides the scalability dimension information for each layer in bitstreamInScope (defined below), such as 1) when bitstreamInScope may be a multiview bitstream, the view ID of each layer; and 2) when there may be auxiliary information (such as depth or alpha) carried by one or more layers in bitstreamInScope, the auxiliary ID of each layer.

The bitstreamInScope is the sequence of AUs that consists, in decoding order, of the AU containing the current scalability dimension information SEI message, followed by zero or more AUs, including all subsequent AUs up to but not including any subsequent AU that contains a scalability dimension information SEI message.

**sdi**_**max_layers_minus1** plus 1 indicates the maximum number of layers in bitstreamInScope.

**sdi_multiview_info_flag** equal to 1 indicates that bitstreamInScope may be a multiview bitstream and the sdi_view_id_val[ ] syntax elements are present in the scalability dimension information SEI message. sdi_multiview_flag equal to 0 indicates that bitstreamInScope is not a multiview bitstream and the sdi_view_id_val[ ] syntax elements are not present in the scalability dimension information SEI message.

**sdi_auxiliary_info_flag** equal to 1 indicates that there may be auxiliary information carried by one or more layers in bitstreamInScope and the sdi_aux_id[ ] syntax elements are present in the scalability dimension information SEI message. sdi_auxiliary_info_flag equal to 0 indicates that there is no auxiliary information carried by one or more layers in bitstreamInScope and the sdi_aux_id[ ] syntax elements are not present in the scalability dimension information SEI message.

**sdi_view_id_len** specifies the length, in bits, of the sdi_view_id_val[ i ] syntax element.

**sdi_view_id_val**[ i ] specifies the view ID of the i-th layer in bitstreamInScope. The length of the sdi_view_id_val[ i ] syntax element is sdi_view_id_len bits. When not present, the value of sdi_view_id_val[ i ] is inferred to be equal to 0.

**sdi_aux_id**[ i ] equal to 0 indicates that the i-th layer in bitstreamInScope does not contain auxiliary pictures. sdi_aux_id[ i ] greater than 0 indicates the type of auxiliary pictures in the i-th layer in bitstreamInScope as specified in Table 3.

### Mapping of sdi aux id[ i ] to the type of auxiliary pictures

**[Table 3]**

| **sdi**_**aux_id[ i ]** | **Name** | **Type of auxiliary pictures** |
|---|---|---|
| 1 | AUX_ALPHA | Alpha plane |
| 2 | AUX_DEPTH | Depth picture |
| 3..127 | | Reserved |
| 128..159 | | Unspecified |
| 160..255 | | Reserved |

In Table 3 above, the interpretation of auxiliary pictures associated with sdi_aux_id in the range of 128 to 159, inclusive, is specified through means other than the sdi_aux_id value.

sdi_aux_id[ i ] shall be in the range of 0 to 2, inclusive, or 128 to 159, inclusive, for bitstreams conforming to this version of this Specification. Although the value of sdi_aux_id[ i ] shall be in the range of 0 to 2, inclusive, or 128 to 159, inclusive, in this version of this Specification, decoders shall allow values of sdi_aux_id[ i ] in the range of 0 to 255, inclusive.

As described above, the SDI SEI message may provide additional information about the layers present in the corresponding bitstream. To provide information about layers, a loop for a layer list in the bitstream may be included. However, the SDI SEI message does not include information about which layer each index i refers to. That is, the relationship between the i-th layer of the SDI SEI message and the actual layer itself may be defined by layer information present in the VPS of the bitstream. This may cause undesirable results as the VPS may change and the entity changing the VPS may not recognize that the SEI message needs to change as well.

To solve this problem, this disclosure proposes an SEI message including layer identifier information. That is, the present disclosure proposes an image encoding/decoding technology based on an SEI message including layer identifier information of the layer included in the bitstream. Accordingly, the dependency of layer identifier information on the VPS is removed, thereby improving coding efficiency.

According to the present disclosure, Items 1 to 6 below may be provided as items for solving the above problem. Items 1 to 6 below may be implemented independently, or may be implemented by combining two or more items.

Item 1: A Scalable Dimension Information (SDI) SEI message may carry scalable dimension information for more layers than the actual layers that are present in the associated CVS or bitstream.

Item 2: The value of sdi_max_layers_minus1 is not constrained by the number of layers in the corresponding CVS or bitstream. It can be higher, equal, or less.

Item 3: Alternatively, value of sdi_max_layers_minus1 plus 1 shall not be less than the actual number of layers in the corresponding CVS or bitstream.

Item 4: For each view Id and/or auxiliary id, signal the layer id. In other words, signal layer id information in the loop of layers in the SEI message.

Item 5: Layer id in the loop of layers is arranged / signalled in ascending order of the value of layer id.

Item 6: Alternatively, layer id in the loop of layers are arranged / signalled in descending order of the value of layer id.

Hereinafter, embodiments of the present disclosure will be described in detail with reference to the drawings.

### Embodiment 1: SDI SEI message syntax and semantics

Hereinafter, embodiments of the present disclosure will be described based on SDI SEI message syntax and semantics according to the present disclosure with reference to FG. 15.

As an example, the SDI SEI message may include scalability dimension information of each layer in a bitstream (e.g., bitstreamInScope (defined below). For example, in the SEI message, 1) when the bitstream may be a multiview bitstream, the view ID of each layer may be included; and 2) when there may be auxiliary information (such as depth or alpha) carried by one or more layers in the bitstream, the auxiliary ID of each layer may be included.

As an example, the bitstream (e.g., bitstreamInScope) is the sequence of AUs that consists, in decoding order, of one or more AUs containing the current SDI SEI message, followed by zero or more AUs, including all subsequent AUs up to but not including any subsequent AU that contains an SDI SEI message.

As an example, sdi_max_layers_minus1 plus 1 may indicate the maximum number of layers in the bitstream. sdi_multiview_info_flag equal to 1 may indicate that the bitstream is a Multiview bitstream and the sdi_view_id_val[ ] syntax element is present in the SDI SEI message. sdi_multiview_flag equal to 0 may indicate that the bitstream is not a Multiview bitstream and the sdi_view_id_val[ ] syntax element is not present in the SDI SEI message.

As another example, the SDI SEI message may carry scalable dimension information of more layers than the actual layers present in the associated CVS or bitstream. That is, the value of sdi_max_layers_minus1 may not be constrained by the number of layers in the corresponding CVS or bitstream. In other words, it may be less than, equal to, or greater than the number of layers of the corresponding CVS or bitstream. Alternatively, the value of sdi_max_layers_minus1 plus 1 may not always be less than the actual number of layers in the corresponding CVS or bitstream.

sdi_auxiliary_info_flag equal to 1 indicates that there may be auxiliary information carried by one or more layers in the bitstream and the sdi_aux_id[ ] syntax elements are present in the SDI SEI message. sdi_auxiliary_info_flag equal to 0 indicates that there is no auxiliary information carried by one or more layers in the bitstream and the sdi_aux_id[ ] syntax elements are not present in the SDI SEI message.

sdi_view_id_len may specify the length, in bits, of the sdi_view_id_val[ i ] syntax element.

sdi_view_id_val[ i ] may specify information about the layer ID of the i-th layer in the bitstream (bitstreamInScope). The i value may have a value in the range from 0 to sdi_max_layers_minus1 - 1, inclusive. The value of sdi_layer_id[ i ] may be arranged in descending order to be less than sid_layer_id[ i - 1 ]. However, it is not limited to this and may be arranged in ascending order or other order.

As another example, sdi_view_id_val[ i ] may specify the layer identifier information of the i-th layer in the bitstream. The length of the sdi_view_id_val[ i ] syntax element is sdi_view_id_len bits. When not present, the value of sdi_view_id_val[ i ] is inferred to be equal to 0.

As an example, sdi_aux_id[ i ] equal to 0 may indicate that the i-th layer in the bitstream does not contain auxiliary pictures. sdi_aux_id[ i ] greater than 0 may indicate the type of auxiliary pictures in the i-th layer in the bitstream as specified in Table 4. Table 4 is as follows.

### Mapping of sdi_aux_id[ i ] to the type of auxiliary pictures

**Table 4**

| **sdi_aux_id[ i ]** | **Name** | **Type of auxiliary pictures** |
|---|---|---|
| 1 | AUX_ALPHA | Alpha plane |
| 2 | AUX_DEPTH | Depth picture |
| 3..127 | | Reserved |
| 128..159 | | Unspecified |
| 160..255 | | Reserved |

As shown in the above table, the interpretation of auxiliary picture type associated with sdi_aux_id in the range of 128 to 159, inclusive, may not be specified. Accordingly, the auxiliary picture type may be specified through means other than the sdi_aux_id value.

As an example, for bitstream conformance, sdi_aux_id[ i ] shall be in the range of 0 to 2, inclusive, or 128 to 159, inclusive. As an example, although the value of sdi_aux_id[ i ] is constrained in the range of 0 to 2, inclusive, or 128 to 159, inclusive, the decoder shall allow values of sdi_aux_id[ i ] in the range of 0 to 255, inclusive.

As another example, for each view Id and/or auxiliary id, the layer id may be signaled. In other words, layer id information may be signaled in the loop of layers in the SEI message. In this case, layer id information of the layer may be arranged/signalled in ascending order or descending order of the value of layer id.

According to the above embodiment, coding efficiency can be improved by removing unnecessary dependency on the VPS related to the layer identifier.

### Embodiment 2: Image decoding method according to the present disclosure

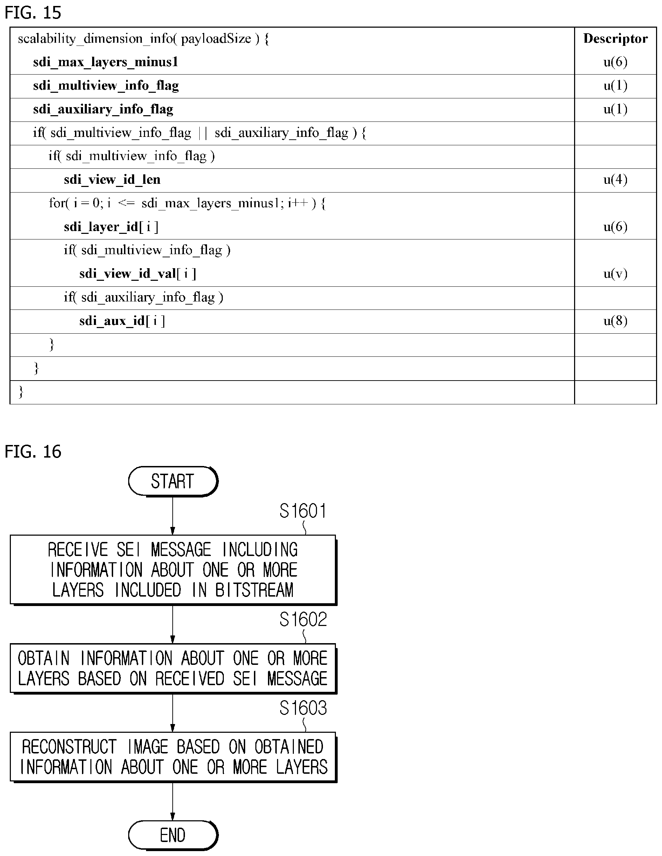

Hereinafter, an image decoding method according to an embodiment of the present disclosure will be described with reference to FIG. 16.

The image decoding method of FIG. 16 may be performed by an image decoding apparatus. The image decoding apparatus may first receive a supplemental enhancement information (SEI) message including information about one or more layers included in a bitstream as a bitstream (S1601). Thereafter, information about the one or more layers may be obtained based on the received SEI message (S1602), and the image in the bitstream may be reconstructed based on the obtained information about the one or more layers (S1603).

At this time, the SEI message may be an SDI SEI message according to the present disclosure. As an example, the received SEI message may include layer identifier information of the one or more layers included in the bitstream. As an example, layer identifier information may include the sdi_layer_id described above. In addition, the layer identifier information may be obtained by the maximum number of layers in the bitstream. Information about the maximum number of layers in the bitstream may be obtained from the SEI message. That is, information about the maximum number of layers may be included in the SEI message. As an example, the SEI message may include information about layers other than one or more layers included in the bitstream. That is, it may include information about more layers than the actual layers included in the bitstream. That is, the maximum number of layers in the bitstream may not be constrained by the number of one or more layers in the bitstream. As another example, the maximum number of layers in the bitstream may be constrained to not have a value less than the number of one or more layers in the bitstream, or may be smaller than the number of one or more layers in the bitstream. Meanwhile, layer identifier information may be signaled for each of view identifier (view id) information or auxiliary identifier (auxiliary id). In addition, the layer identifier information may be included in the SEI message in ascending order of layer identifier values such that the layer identifier of the i-th layer has a larger value than the layer identifier of the (i-1)-th layer, or conversely, may be included in the SEI message in descending order of layer identifier values such that the layer identifier of the i-th layer has a smaller value than the layer identifier of the (i-1)-th layer.

Meanwhile, since FIG. 16 corresponds to an embodiment of the present disclosure, some steps may be added, changed, or deleted, and the order of steps may be changed.

### Embodiment 3: Image encoding method according to the present disclosure

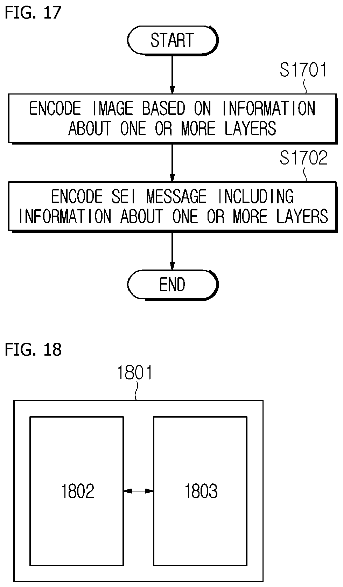

Hereinafter, an image encoding method according to an embodiment of the present disclosure will be described with reference to FIG. 17.

The image encoding method of FIG. 17 may be performed by an image encoding apparatus. The image encoding apparatus may first encode an image based on information about one or more layers (S1701). That is, the image in the bitstream may be encoded based on information about one or more layers in the bitstream. Thereafter, the SEI message including information about one or more layers may be encoded (S1702). That is, a supplemental enhancement information (SEI) message including information about one or more layers included in the bitstream may be encoded into a bitstream.

At this time, the SEI message may be an SDI SEI message according to the present disclosure. As an example, the SEI message may include layer identifier information of the one or more layers included in the bitstream. As an example, layer identifier information may include the sdi_layer_id described above. In addition, the layer identifier information may be obtained in the SEI message by the maximum number of layers in the bitstream. Information about the maximum number of layers in the bitstream may also be included in the SEI message. That is, information about the maximum number of layers may be included in the SEI message. As an example, the SEI message may further include information about a layer other than one or more layers included in the bitstream. As another example, the maximum number of layers in the bitstream may be constrained to not have a value less than the number of one or more layers in the bitstream, or may be smaller than the number of one or more layers in the bitstream. Meanwhile, layer identifier information may be included in the bitstream for each of view identifier (view id) information or auxiliary identifier (auxiliary id). In addition, the layer identifier information may be included and encoded in the SEI message in ascending order of layer identifier values or may be included in the SEI message in descending order, such that the layer identifier of the i-th layer has a larger value than the layer identifier of the (i-1)-th layer.

Meanwhile, since FIG. 17 corresponds to an embodiment of the present disclosure, some steps may be added, changed, or deleted, and the order of steps may be changed.

### Embodiment 4: Image encoding/decoding apparatus according to the present disclosure

As an embodiment, the image encoding/decoding apparatus 1801 of FIG. 18 may include a memory 1802 that stores data and a processor 1803 that controls the memory, and the image encoding/decoding described above may be performed based on the processor. In addition, the apparatus 1801 of FIG. 18 may be a simplified representation of the apparatus of FIGS. 2 and 3 and may perform the functions described above.

As an embodiment, when the apparatus 1801 of FIG. 18 is an image decoding apparatus, the processor 1803 may receive a supplemental enhancement information (SEI) message including information about one or more layers included in a bitstream as a bitstream, obtain information about one or more layers based on the received SEI message, and reconstruct the image in the bitstream based on the obtained information about one or more layers. In addition, the received SEI message may include layer identifier information of the one or more layers included in the bitstream.

As another embodiment, when the apparatus 1801 of FIG. 18 is an image encoding apparatus, the processor 1803 may encode an image in a bitstream based on information about one or more layers in the bitstream and encode a supplemental enhancement information (SEI) message including information about one or more included in the bitstream into the bitstream. Meanwhile, the SEI message may include layer identifier information of the one or more layers included in the bitstream.

Various embodiments according to the present disclosure may be used alone or in combination with other embodiments.

While the exemplary methods of the present disclosure described above are represented as a series of operations for clarity of description, it is not intended to limit the order in which the steps are performed, and the steps may be performed simultaneously or in different order as necessary. In order to implement the method according to the present disclosure, the described steps may further include other steps, may include remaining steps except for some of the steps, or may include other additional steps except for some steps.

In the present disclosure, the image encoding apparatus or the image decoding apparatus that performs a predetermined operation (step) may perform an operation (step) of confirming an execution condition or situation of the corresponding operation (step). For example, if it is described that predetermined operation is performed when a predetermined condition is satisfied, the image encoding apparatus or the image decoding apparatus may perform the predetermined operation after determining whether the predetermined condition is satisfied.

The various embodiments of the present disclosure are not a list of all possible combinations and are intended to describe representative aspects of the present disclosure, and the matters described in the various embodiments may be applied independently or in combination of two or more.

Various embodiments of the present disclosure may be implemented in hardware, firmware, software, or a combination thereof. In the case of implementing the present disclosure by hardware, the present disclosure can be implemented with application specific integrated circuits (ASICs), Digital signal processors (DSPs), digital signal processing devices (DSPDs), programmable logic devices (PLDs), field programmable gate arrays (FPGAs), general processors, controllers, microcontrollers, microprocessors, etc.

In addition, the image decoding apparatus and the image encoding apparatus, to which the embodiments of the present disclosure are applied, may be included in a multimedia broadcasting transmission and reception device, a mobile communication terminal, a home cinema video device, a digital cinema video device, a surveillance camera, a video chat device, a real time communication device such as video communication, a mobile streaming device, a storage medium, a camcorder, a video on demand (VoD) service providing device, an OTT video (over the top video) device, an Internet streaming service providing device, a three-dimensional (3D) video device, a video telephony video device, a medical video device, and the like, and may be used to process video signals or data signals. For example, the OTT video devices may include a game console, a blu-ray player, an Internet access TV, a home theater system, a smartphone, a tablet PC, a digital video recorder (DVR), or the like.

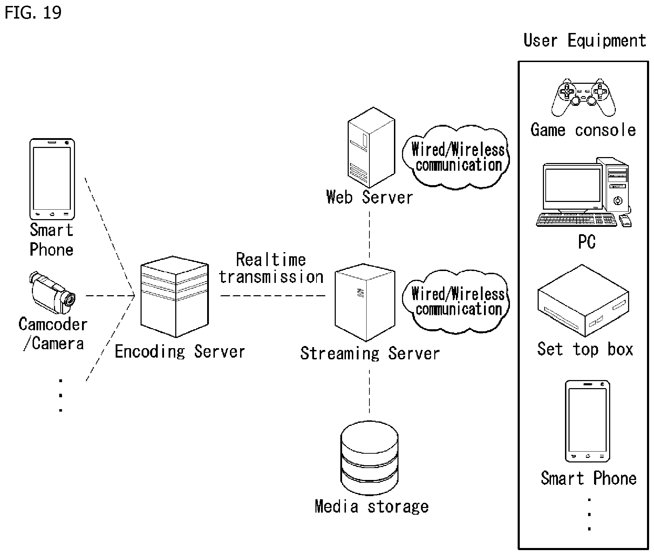

FIG. 19 is a view showing a content streaming system, to which an embodiment of the present disclosure is applicable.

As shown in FIG. 19, the content streaming system, to which the embodiment of the present disclosure is applied, may largely include an encoding server, a streaming server, a web server, a media storage, a user device, and a multimedia input device.

The encoding server compresses content input from multimedia input devices such as a smartphone, a camera, a camcorder, etc. into digital data to generate a bitstream and transmits the bitstream to the streaming server. As another example, when the multimedia input devices such as smartphones, cameras, camcorders, etc. directly generate a bitstream, the encoding server may be omitted.

The bitstream may be generated by an image encoding method or an image encoding apparatus, to which the embodiment of the present disclosure is applied, and the streaming server may temporarily store the bitstream in the process of transmitting or receiving the bitstream.

The streaming server transmits the multimedia data to the user device based on a user's request through the web server, and the web server serves as a medium for informing the user of a service. When the user requests a desired service from the web server, the web server may deliver it to a streaming server, and the streaming server may transmit multimedia data to the user. In this case, the content streaming system may include a separate control server. In this case, the control server serves to control a command/response between devices in the content streaming system.

The streaming server may receive content from a media storage and/or an encoding server. For example, when the content is received from the encoding server, the content may be received in real time. In this case, in order to provide a smooth streaming service, the streaming server may store the bitstream for a predetermined time.

Examples of the user device may include a mobile phone, a smartphone, a laptop computer, a digital broadcasting terminal, a personal digital assistant (PDA), a portable multimedia player (PMP), navigation, a slate PC, tablet PCs, ultrabooks, wearable devices (e.g., smartwatches, smart glasses, head mounted displays), digital TVs, desktops computer, digital signage, and the like.

Each server in the content streaming system may be operated as a distributed server, in which case data received from each server may be distributed.

The scope of the disclosure includes software or machine-executable commands (e.g., an operating system, an application, firmware, a program, etc.) for enabling operations according to the methods of various embodiments to be executed on an apparatus or a computer, a non-transitory computer-readable medium having such software or commands stored thereon and executable on the apparatus or the computer.

### Industrial Applicability

The embodiments of the present disclosure may be used to encode or decode an image.

## Claims

1. An image decoding method performed by an image decoding apparatus, the image decoding method comprising:
receiving a supplemental enhancement information (SEI) message including information about one or more layers included in a bitstream;
obtaining the information about the one or more layers based on the received SEI message; and
reconstructing an image in the bitstream based on the obtained information about the one or more layers,
wherein the received SEI message comprises layer identifier information of the one or more layers included in the bitstream.

2. The image decoding method of claim 1, wherein the layer identifier information is obtained by a maximum number of layers in the bitstream.

3. The image decoding method of claim 2, wherein information about the maximum number of layers in the bitstream is obtained from the SEI message.

4. The image decoding method of claim 1, wherein the SEI message comprises information about a layer other than the one or more layers included in the bitstream.

5. The image decoding method of claim 2, wherein the maximum number of layers in the bitstream is not constrained by the number of one or more layers in the bitstream.

6. The image decoding method of claim 2, wherein the maximum number of layers in the bitstream is constrained not to have a value less than the number of one or more layers in the bitstream.

7. The image decoding method of claim 1, wherein the layer identifier information is signaled for each of a view id or an auxiliary id.

8. The image decoding method of claim 1, wherein the layer identifier information is included in the SEI message in ascending order of layer identifier values such that a layer identifier of an i-th layer has a larger value than a layer identifier of an (i-1)-th layer.

9. The image decoding method of claim 1, wherein the layer identifier information is included in the SEI message in descending order of layer identifier values such that a layer identifier of an i-th layer has a smaller value than a layer identifier of an (i-1)-th layer.

10. An image encoding method performed by an image encoding apparatus, the image encoding method comprising:
encoding an image in a bitstream based on information about one or more layers in the bitstream; and
encoding a supplemental enhancement information (SEI) message including information about the one or more layers included in the bitstream into the bitstream,
wherein the SEI message comprises layer identifier information of the one or more layers included in the bitstream.

11. The image encoding method of claim 10, wherein the layer identifier information is included in the SEI message by a maximum number of layers in the bitstream.

12. The image encoding method of claim 10, wherein information about a maximum number of layers in the bitstream is included in the SEI message.

13. A method of transmitting the bitstream generated by the image encoding method of claim 10.

14. A non-transitory computer-readable recording medium storing the bitstream generated by the image encoding method of claim 10.
